**Europäisches Patentamt**

**European Patent Office**

**Office européen des brevets**

(19)

(11) Veröffentlichungsnummer : **0 486 833 B1**

(12) ## EUROPÄISCHE PATENTSCHRIFT

(45) Veröffentlichungstag der Patentschrift :
**15.02.95 Patentblatt 95/07**

(51) Int. Cl.⁶ : **H04B 1/66**

(21) Anmeldenummer : **91118101.4**

(22) Anmeldetag : **24.10.91**

(54) **Empfänger für ein DSSS-Signal.**

(30) Priorität : **22.11.90 CH 3701/90**

(43) Veröffentlichungstag der Anmeldung :
**27.05.92 Patentblatt 92/22**

(45) Bekanntmachung des Hinweises auf die
Patenterteilung :
**15.02.95 Patentblatt 95/07**

(84) Benannte Vertragsstaaten :
**AT CH DE FR GB LI SE**

(56) Entgegenhaltungen :
**GOSLING 'RADIO RECEIVERS' 1986 , PERE-
GRINUS , LONDON (GB)
1989 INTERNATIONAL SYMPOSIUM DIGEST
ANTENNAS ANDPROPAGATION Bd. 2, 26.
Juni1989, NEW YORK Seiten 798 - 801; TOU:
'ADAPTIVE MODELING OF RADIO PROPAGA-
TIONCHANNELS'
IEEE TRANSACTIONS ON COMMUNICA-
TIONS. Bd. 36, Nr. 5, Mai 1988, NEWYORK US
Seiten 564 - 576; FISCHER ET AL.: 'WIDE-
BAND PACKET RADIO FOR MULTIPATHENVI-
RONMENTS'**

(56) Entgegenhaltungen :
**GLOBECOM 1990 CONFERENCE RECORD Bd.
3, 2. Dezember 1990, NEWYORK (US) Seiten
2045 - 2050; DE WECK ET AL.: 'REAL-TIME
ESTIMATION OF VERYFREQUENCY SELEC-
TIVE MULTIPATH CHANNELS'**

(73) Patentinhaber : **ASCOM TECH AG
Berner Technopark
Morgenstrasse 129
CH-3018 Bern (CH)**

(72) Erfinder : **Neeser, Fredy
Bungertweg 11
8032 Zürich (CH)**
Erfinder : **Hufschmid , Markus
Neugasse 31
8032 Zürich (CH)**
Erfinder : **Ruprecht, Jürg
Kräyingenweg 84
3074 Muri (CH)**

(74) Vertreter : **Keller, René, Dr. et al
Dr. R. Keller & Partner
Patentanwälte
Marktgasse 31
Postfach
CH-3000 Bern 7 (CH)**

EP 0 486 833 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 486 833 B1

**Beschreibung**

**Empfänger für ein DSSS Signal**

**Technisches Gebiet**

Die Erfindung betrifft einen Empfänger für ein DSSS Signal (DSSS = Direct Sequence Spread Spectrum), wobei im DSSS Signal digitale Daten in Form von Symbolen mit einer vorgegebenen Pulssequenz der Länge L gespreizt sind.

**Stand der Technik**

Seit einiger Zeit sind Bestrebungen im Gang, ein digitales Mobilfunknetz zu realisieren. Es sind auch schon entsprechende Standards definiert worden (z.B. GSM: Schmalbandiges paneuropäisches Mobilfunksystem; CD 900: Ziviles Bandspreiz System). Die Entwicklung ist jedoch noch keineswegs abgeschlossen. Nach wie vor ist noch offen, wie der für die Uebertragung digitaler Daten im Prinzip denkbar schlecht geeignete terrestrische Mobilfunkkanal optimal genutzt werden kann. Es geht dabei nicht nur darum, die auftretenden Störungen (Mehrwegausbreitung, zeit- und frequenz abhängiger Schwund, etc.) bestmöglich zu eliminieren, sondern auch darum, dies schaltungstechnisch und bandbreitenmässig effizient zu verwirklichen.

Bandspreizsysteme, die a priori auf die Mehrwegausbreitung des Mobilfunkkanals zugeschnitten scheinen, sind relativ immun gegenüber Jamming, haben aber den Nachteil, dass ihre Implementation aufwendig ist. Aus diesen Gründen war die Bandspreiztechnik vorallem auf militärische Anwendungen beschränkt.

Das Prinzip bei der Uebertragung eines sog. Direct Sequence Spread Spectrum Signals, im folgenden kurz DSSS Signal genannt, besteht darin, dass die zu übertragenden Daten mit einer vorgegebenen Pulssequenz der Länge L multipliziert werden. Die Pulssequenz hat dabei eine Chiprate, die ein L-faches der Symbolrate beträgt. Im Empfänger wird das DSSS Signal mit einem sog. Matched Filter oder einem Korrelator detektiert (vgl. "Principles of Communication systems", W. Taub, D.L. Schilling, McGraw Hill, Singapore 1986, pp. 720-727).

Eine Analyse der Vor- und Nachteile von DSSS Systemen liefert der Artikel "Spread Spectrum Communications - Myths and Realities", A.J. Viterbi, IEEE Communications Magazine, May 1979, pp. 11-18.

Um eine zuverlässige Datenübertragung schaffen zu können, ist es wichtig, die Kanalstossantwort zu ermitteln. In Mobilfunksystemen, wo sich die Teilnehmer ständig bewegen, ist es natürlich nicht möglich, den Kanal ein für alle Mal zu messen und im Empfänger das Filter entsprechend einzustellen. Vielmehr muss ein Verfahren geschaffen werden, welches die Kanalstossantwort kontinuierlich oder in regelmässigen Zeitabständen bestimmt.

In diesem Zusammenhang ist auf die Dissertation von Jürg Ruprecht "Maximum-Likelihood Estimation of Multipath Channels", Diss. ETH Nr. 8789, Zürich 1989, Hartung-Gorre Verlag, hinzuweisen. Die für den Mobilfunk wichtige Aufgabe der Kanalschätzung wird dabei so gelöst, dass eine bekannte Pulssequenz mit wohldefinierten Eigenschaften über den Kanal geschickt wird und im Empfänger von einem bezüglich der Pulssequenz inversen Filter gefiltert wird. Das Inversfilter reagiert dabei derart auf die übermittelte Pulssequenz, dass am Ausgang des Filters die gewünschte Impulsantwort des Kanals vorliegt.

**Darstellung der Erfindung**

Aufgabe der Erfindung ist es, einen Empfänger der eingangs genannten Art anzugeben, der insbesondere für den Empfang digitaler Daten auf Moblilfunkkanälen geeignet ist und sich schaltungstechnisch effizient implementieren lässt.

Erfindungsgemäss besteht die Lösung darin, dass zum Detektieren der Symbole ein approximiertes Inversfilter vorgesehen ist, welches bei Anregung durch die vorgegebene Pulssequenz (s[·]) als solche annähernd mit einer Kronecker-Delta-Sequenz als Ausgangssequenz antwortet.

Der Kern der Erfindung liegt darin, dass zum Detektieren der Daten das DSSS Signal nicht mit einem Matched Filter, sondern mit einem Inversfilter verarbeitet wird. Das Matched Filter ist zwar das bessere in Bezug auf den maximalen Rauschabstand, doch ist das Inversfilter dem Matched Filter bezüglich des sog. Peak/Off Peak-Verhältnisses (Verhältnis von maximaler Amplitude zu grösster Nebenamplitude des gefilterten DSSS Signals) um Faktoren überlegen. Die Impulsspitzen am Filterausgang, welche die übertragenen Daten beinhalten, lassen sich damit einfacher und zuverlässiger detektieren.

Zwischen der Uebertragung von Daten und der Kanalschätzung mittels bekannter Pulssequenzen besteht ein wesentlicher Unterschied. Bei der Kanalschätzung kennt der Empfänger die übertragenen "Daten", nämlich

2

die einzelnen Chips der Pulssequenz, betrags- und vorzeichenmässig im voraus, während bei der Datendetektion unbekannte Daten (Symbole), mit welchen die Pulssequenz multipliziert ist, ermittelt werden müssen. Die im DSSS Signal verwendete Pulssequenz ist als solche dem Empfänger zwar bekannt, nicht jedoch das Symbol, mit dem die Sequenz im konkreten Fall multipliziert worden ist.

Ein wesentlicher Vorteil der Erfindung besteht darin, dass die Kanalschätzung in der Datendetektion integriert ist. Sie bildet nämlich einen Teil derselben. Entsprechend ist der empfängerseitige Schaltungsaufwand geringer als bei den bekannten Matched Filter Empfängern.

Das ideale Inversfilter hat unendlich viele Koeffizienten. Es reagiert auf die Pulssequenz als solche mit einer reinen Kronecker-Delta-Sequenz, d.h. die digitale Systemantwort ist nur zum Zeitpunkt i = 0 verschieden von Null. (Bei einer Filterlänge von L + 2M entspricht dies dem Grenzfall M --> ∞.)

In der Praxis ist das Inversfilter natürlich nur näherungsweise realisierbar. Weil aber die Koeffizienten v[k] des idealen Inversfilters im Fall einer geeignet ausgewählten Pulssequenz für grosse k exponentiell zerfallen, lassen sich auch mit Filtern vernünftiger Länge schon ziemlich gute Resultate erreichen. Gemäss einer vorteilhaften Ausführungsform gehorchen die Koeffizienten v[k] des Inversfilters folgender Beziehung:

$$v[k] = \frac{1}{2\pi} \int_{-\pi}^{\pi} \frac{d\Omega}{\sum\limits_{i=0}^{L-1} s[i]e^{j(i-k)\Omega}} \quad ,$$

$k = -M_1 \ldots L+M_2$, $v[k] = 0$, für $k < -M_1$ und $k > L+M_2$.

Für $-M_1 \leqq k \leqq L+M_2$ entsprechen die Filterkoeffizienten dem idealen Fall, ausserhalb des genannten Bereiches sind sie einfach auf Null gesetzt. Das approximierte Inversfilter entspricht somit dem abgeschnittenen idealen Inversfilter ($M_1$ und $M_2$ sind vorgebbare Zahlen, d.h. sog. Designparameter).

Eine Alternative besteht darin, die Koeffizienten durch Multiplikation mit einer geeigneten Fensterfunktion zeitlich zu begrenzen und vorteilhaft zu gewichten.

Es gibt verschiedene Approximationsstrategien. Neben dem Abschneiden des idealen Inversfilters sind insbesondere die folgenden zwei Näherungslösungen von Bedeutung:

1. Least Square-Approximation;
2. Approximation für maximales POP-Verhältnis.

Im ersten Fall antwortet das approximierte Inversfilter bei Anregung durch die vorgegebene Pulssequenz (s[·]) als solche mit einer Ausgangssequenz, die die Kronecker-Delta-Sequenz im Sinn der kleinsten Fehlerquadrate annähert.

Im zweiten Fall hat die Ausgangssequenz ein maximales Peak/Off Peak-Verhältnis. D.h. der grösste Nebenpeak wird im Verhältnis zum Hauptpeak so klein wie möglich gemacht. Es handelt sich hier um eine Approximation an das unendlich grosse Peak/Off Peak-Verhältnis einer Kronecker-Delta-Sequenz.

Die Pulssequenz ist vorzugsweise so gewählt, dass sie in einem maximalen Prozessgewinn G resultiert. Unter dem Prozessgewinn wird dabei die Inverse der Energie des Inversfilters verstanden:

$$G = \frac{1}{\sum\limits_{i=-\infty}^{+\infty} v[i]^2}$$

Der Prozessgewinn sollte also dem Matched Filter Bound, d.h. der theoretisch bedingten oberen Grenze, möglichst nahe kommt.

Der Matched Filter Bound entspricht der Sequenzlänge L, d.h. $G \leqq L$.

Mit anderen Worten: Der Prozessgewinn G der gewählten Pulssequenz sollte in bezug auf möglichst viele, insbesondere alle Pulssequenzen gegebener Länge L maximal sein.

Die Maximierung des Prozessgewinns führt zu einer MMSE Schätzung des Kanals (Minimum Mean Square Error).

Dem Inversfilter ist vorzugsweise ein sog. "Matched Filter Detektor", kurz MF-Detektor, nachgeschaltet.

Es handelt sich dabei um eine Schaltanordnung, die im wesentlichen ein an den Kanal angepasstes Matched Filter und einen Schwellwertdetektor umfasst. Der MF-Detektor ergibt in erster Näherung eine Maximum-Likelihood Detektion der Datensymbole.

Durch die Verwendung des Inversfilters wird die Kanalschätzung beinahe automatisch mit der Datendetektion mitgeliefert. Es empfiehlt sich, im Sinn einer Entscheidungsrückführung (Decision Feedback) mit Hilfe der im Empfänger geschätzten Daten den multiplikativen Einfluss der Symbole auf das Ausgangssignals des Inversfilters rückgängig zu machen (Reduzieren des Ausgangssignals), die in den verschiedenen Symbolintervallen erhaltenen Kanalstossantworten zu mitteln und zum Einstellen der Koeffizienten des kanalangepassten Matched Filters zu verwenden.

Damit die Kanalstossantwort möglichst verzerrungsfrei geschätzt werden kann, sollten die Symbole eine Symboldauer haben, die grösser als die Dauer der Kanalstossantwort ist.

Im Hinblick auf die Signalverstärkung im Sender ist es vorteilhaft, wenn die Pulssequenz eine konstante Hüllkurve hat. Dies heisst nichts anderes, als dass die Einzelpulse der Sequenz betragsmässig alle gleich gross sind.

Besonders einfach lässt sich die Erfindung mit binären Pulssequenzen und wahlweise auch mit binären Symbolen realisieren. Die im Zusammenhang mit der Kanalschätzung erwähnte Reduktion des Ausgangssignals erfordert dann im wesentlichen eine einfache Multiplikation.

Ein typischer Anwendungsbereich für die Erfindung ist die Mobilfunktechnik, sei es nun im makro- oder im mikrozellularen Bereich. Die Vorteile der DSSS Signale in Verbindung mit dem Inversfilter werden vorallem in sog. Inhouse-Anwendungen (mikrozellular) zum Tragen kommen, da hier die Signallaufzeiten und die Dauer der Impulsantworten relativ klein (typisch < 500 ns) sind.

Aus der Gesamtheit der abhängigen Patentansprüchen ergeben sich weitere vorteilhafte Ausführungsformen.

## Kurze Beschreibung der Zeichnungen

Nachfolgend soll die Erfindung anhand von Ausführungsbeispielen und im Zusammenhang mit den Zeichnungen näher erläutert werden. Es zeigen:

Fig. 1    eine schematische Darstellung des Senders und des Empfängers;
Fig. 2    das Wirkungsprinzip des idealen Inversfilters;
Fig. 3    eine schematische Darstellung des Inversfilters;
Fig. 4a,b    eine schematische Darstellung einer Fensterfunktion für das Inversfilters;
Fig. 5    das Wirkungsprinzip des realen Inversfilters;
Fig. 6    ein Blockschaltbild eines MF-Detektors mit Decision Feedback; und
Fig. 7a,b    Prinzip der Kanalschätzung.

Die in den Zeichnungen verwendeten Bezugszeichen und deren Bedeutung sind in der Bezeichnungsliste zusammenfassend aufgelistet. Grundsätzlich sind in den Figuren gleiche Teile mit gleichen Bezugszeichen versehen.

## Wege zur Ausführung der Erfindung

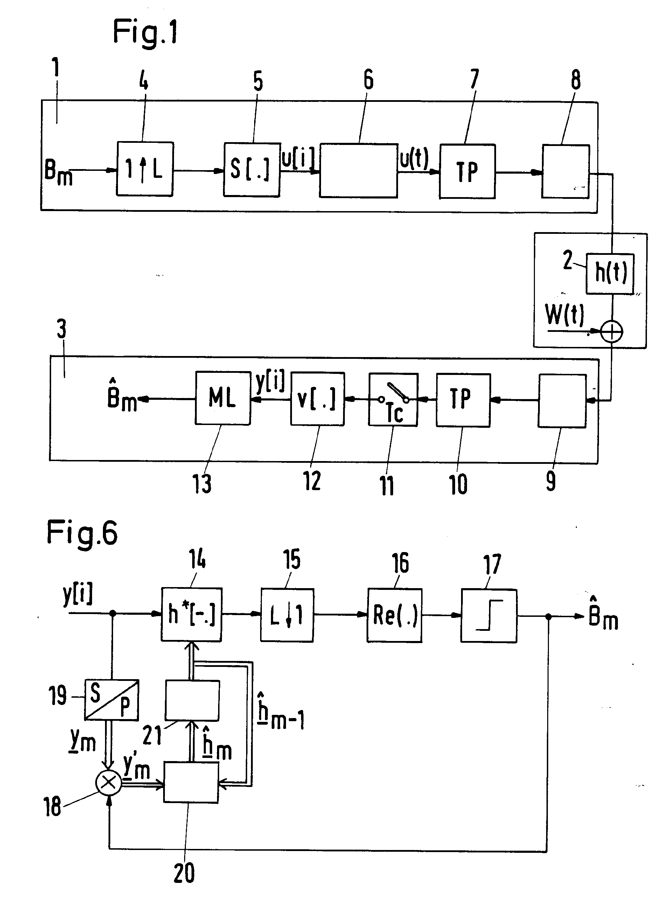

Fig. 1 zeigt die prinzipielle Darstellung einer erfindungsgemässen Sender/Empfängerstruktur. Ein Sender 1, der z.B. Teil eines Funktelefons ist, überträgt digitale Daten (z.B. ein digitalisiertes Sprachsignal) über einen Kanal 2 zu einem Empfänger 3, z.B. zu einer Basisstation des Mobilfunksystems. Der Kanal 2 hat eine zeitvariante Stossantwort h(t), die typischerweise von einer Mehrwegausbreitung gekennzeichnet ist. Das Uebertragungssignal wird ausserdem von additivem weissem Gauss'schem Rauschen W(t) überlagert.

Im Sender liegen die digitalen Daten in Form von Symbolen $B_m$ in einem gegebenen zeitlichen Abstand $T_s$ (Symboldauer) vor. In einer Spreizschaltung 4 wird die Symboldauer $T_s$ in eine vorgegebene Zahl von L Chipintervallen $T_c$ (Chipdauer) aufgeteilt, d.h. $T_s = LT_c$. Das Ausgangssignal ist in allen Chipintervallen ausser einem identisch Null. Der Einfachheit halber wird angenommen, dass es sich dabei um das erste Intervall handelt.

Ein Pulssequenzgenerator 5 erzeugt aus den zeitlich gespreizten Symbolen ein DSSS Signal der Form:

$$(I) \qquad U[i] = \sum_m B_m s[i-mL] .$$

Das DSSS Signal U[i] setzt sich also aus zeitlichen Abschnitten der Länge $LT_s$ zusammen, in denen jeweils die L Pulse der Pulssequenz s[.] multipliziert mit dem Symbol $B_m$ untergebracht sind.

Das DSSS Signal U[i] wird mit einem nachfolgenden Impulsmodulator 6 und einem Tiefpassfilter 7 in ein frequenzmässig beschränktes zeitkontinuierliches Signal umgewandelt, welches dann in einem konventionellen Modulator 8 in an sich bekannter Weise einer Trägerschwingung aufmoduliert wird.

Das übertragene DSSS Signal wird im Empfänger 3 zunächst von der Trägerschwingung heruntermoduliert (Demodulator 9), in einem Tiefpassfilter 10 von unerwünschten Frequenzanteilen befreit und danach entsprechend der Chiprate $1/T_c$ abgetastet (Abtaster 11).

Entsprechend dem Wesen der Erfindung wird das nun vorliegende Empfangssignal durch ein Inversfilter 12 verarbeitet. Das Ausgangssignal Y[i] des Inversfilters wird abschliessend von einem ML-Detektor 13 ausgewertet, so dass schliesslich die geschätzten Symbole ($B_m$ gekennzeichnet mit einem Dach) vorliegen.

Die Eigenschaften und Wirkungen dieses zentralen Inversfilters 12 werden im folgenden ausführlich erläutert.

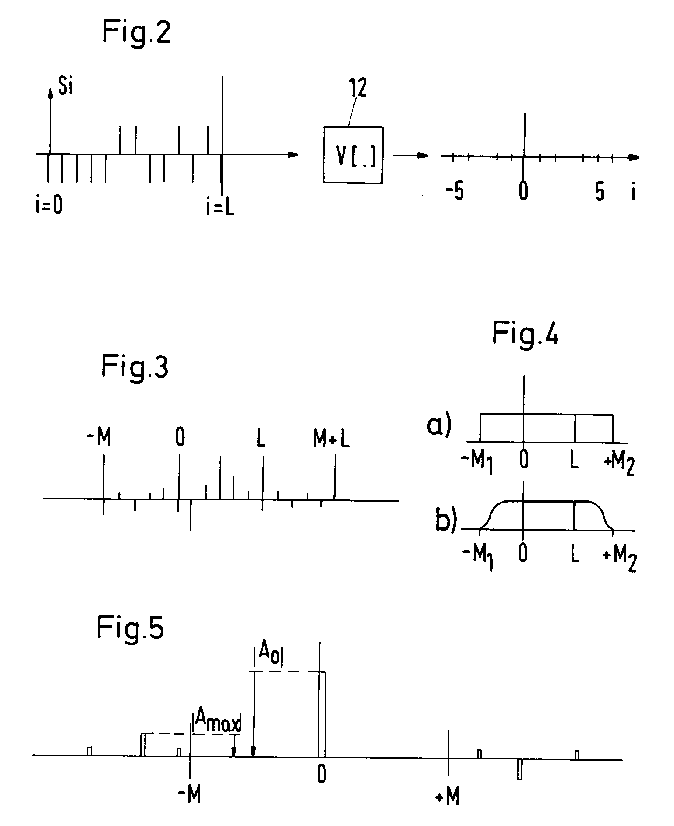

Fig. 2 veranschaulicht die Wirkung des Inversfilters 12. Es ist auf ganz bestimmte Weise auf die vom Sender verwendete Pulssequenz s[.] abgestimmt. In der linken Hälfte der Figur ist als Beispiel eine aperiodische Pulssequenz $s[.] = \{s_0,...,s_L\}$ der Länge L = 13 dargestellt (s[i] = 0 für i < 0 und i > L). Wenn die Sequenz als solche in das entsprechende Inversfilter v[.] gegeben wird, dann resultiert als Systemantwort im Idealfall eine Kronecker-Delta-Sequenz $\delta[k]$ (siehe rechte Hälfte der Figur). Eine solche Sequenz zeichnet sich bekanntlich dadurch aus, dass sie nur zum Zeitpunkt i = 0 verschieden von Null ist:

$$(II) \qquad \sum_{i=0}^{L-1} s[i]v[k-i] = \delta[k] \ .$$

Das ideale Inversfilter hat unendlich viele Filterkoeffizienten v[k]. In der Praxis ist ein solches Filter natürlich nicht exakt realisierbar. Deshalb wird das Inversfilter auf eine Länge $-M_1 \leqq k \leqq M_2+L$ begrenzt. Ausserhalb dieses Fensters sind die Filterkoeffizienten v[k] identisch Null. Die $L+M_1+M_2$ Filterkoeffizienten werden so festgelegt, dass das bei Anregung mit der Pulssequenz s[.] resultierende Ausgangssignal des Inversfilters die Kronecker-Delta-Sequenz $\delta[k]$ möglichst gut annähert. Die Art der Approximation wird mit einem geeigneten mathematischen Kriterium definiert. Im folgenden sollen drei vorteilhafte Approximationsstrategien erwähnt werden.

Die von Null verschiedenen Filterkoeffizienten v[k] werden gemäss einem ersten Ausführungsbeispiel der Erfindung so gewählt, dass die Systemantwort auf die entsprechende Pulssequenz nur innerhalb eines vorgegebenen Zeitfensters einer Kronecker-Delta-Sequenz entspricht. D.h. innerhalb des Zeitfensters der Länge $-M_1 \ ... \ +M_2$ ist die Systemantwort nur im Zeitnullpunkt (i = 0) verschieden von Null. Ausserhalb des genannten Fensters treten dagegen durchaus Nebenspitzen auf.

Fig. 3 zeigt schematisch die Koeffizienten eines Inversfilters. L bezeichnet die Länge der entsprechenden Pulssequenz. Bezogen auf L ist das Inversfilter beidseitig um eine vorgegebene Zahl $M_1$ resp. $M_2$ von Koeffizienten verlängert. Insgesamt hat es alse $L+M_1+M_2$ Filterkoeffizienten. Gemäss einer bevorzugten Ausführungsform gehorchen sie folgender Regel:

$$(III) \qquad v[k] = \frac{1}{2\pi} \int_{-\pi}^{\pi} \frac{d\Omega}{\sum_{i=0}^{L-1} s[i]e^{j(i-k)\Omega}} \ ,$$

$k = -M_1 \ ... \ L+M_2$, $v [k] = 0$, für $k < -M_1$ und $k > L+M_2$.

Für $-M_1 \leqq k \leqq L+M_2$ entsprechen die Filterkoeffizienten den idealen Koeffizienten, ausserhalb des genannten Bereiches sind sie einfach auf Null gesetzt (Truncation). Ein derart ausgelegtes Filter ist als solches aus der bereits erwähnten Veröffentlichung von J. Ruprecht bekannt. Dort ist auch gezeigt worden, dass die Koeffizienten (bei geeigneter Wahl der Pulssequenz) für grosse k exponentiell zerfallen und infolgedessen die Truncation durchaus brauchbare Resultate liefert.

Eine Alternative zur Truncation stellt die Gewichtung mit einer Fensterfunktion dar, die am Rand nicht abrupt, sondern sanft gegen Null geht.

Fig. 4 veranschaulicht die beiden Varianten. In Fig. 4a ist die Truncation (konstante Gewichtung innerhalb des Fensters) und in Fig. 4b eine Fensterfunktion mit am Rand abflachender Gewichtung dargestellt.

Fig. 5 zeigt die Wirkung der Truncation auf die Systemantwort des Inversfilters, wenn die entsprechende Pulssequenz als solche eingegeben wird. Innerhalb des Zeitfensters $-M_1...+M_2$ tritt ein einziger Peak auf. Ausserhalb entstehen mehrere (im Prinzip unendlich viele) Nebenspitzen. Diese sind jedoch sehr klein und können mit dem POP-Verhältnis erfasst werden. Das POP-Verhältnis ist definiert als das Verhältnis zwischen dem Betrag der Amplitude des Hauptpulses $A_0$ und demjenigen des grössten Nebenpulses $A_{max}$.

Neben der soeben beschriebenen gibt es noch zwei weitere bevorzugte Approximationsstrategien:

1. Least Square-Approximation;

2. Approximation für maximales POP-Verhältnis.

Im ersten Fall antwortet das approximierte Inversfilter bei Anregung durch die vorgegebene Pulssequenz s[·] als solche mit einer Ausgangssequenz, die die Kronecker-Delta-Sequenz $\delta[k]$ im Sinn der kleinsten Fehlerquadrate annähert:

$$(IV) \qquad \sum_{i=0}^{L-1} s[i]v[k-i] - \delta[k] = \varepsilon[k] \; ,$$

wobei

$\sum \varepsilon^2[k]$ = minimal .

Im zweiten Fall hat die Ausgangssequenz ein maximales Peak/Off Peak-Verhältnis. D.h. der grösste Nebenpeak wird im Verhältnis zum Hauptpeak so klein wie möglich gemacht. Es handelt sich hier um eine Approximation an das unendlich grosse POP-Verhältnis einer Kronecker-Delta-Sequenz.

Eine wichtige Eigenschaft des Inversfilters liegt nun darin, dass diese Nebenspitzen, die mathematisch mit dem Peak/Off Peak Verhältnis (POP ratio) quantitativ erfasst werden können, bei geeigneter Wahl der Pulssequenz sehr klein gehalten werden können.

Ein zentraler Vorteil des Inversfilters besteht somit darin, dass dessen POP-Verhältnis viel grösser ist als das eines Matched Filters (resp. Korrelators). Während das POP-Verhältnis bei einem Matched Filter typischerweise bei etwa 10 liegt, realisiert bereits ein schlechtes Inversfilter POP-Verhältnisse von 100 und mehr. Mit einer Optimierung lassen sich in der Regel durchaus 30-40 dB erreichen. Das Inversfilter ist dem Matched Filter in diesem Punkt also um Grössenordnungen überlegen. Interessant ist nun, dass dieser Vorteil nicht mit einer entsprechend gravierenden Verschlechterung des Rauschabstandes erkauft werden muss.

Vorzugsweise wird die Pulssequenz s[.] so ausgelegt, dass das Inversfilter einen maximalen Prozessgewinn G (Process gain) aufweist. Unter dem Prozessgewinn wird dabei die Inverse der Energie des Inversfilters verstanden:

$$(V) \qquad G = \dfrac{1}{\displaystyle\sum_{i=-\infty}^{+\infty} v[i]^2} \; .$$

Falls zu einem L mehrere Pulssequenzen mit gleichem G existieren, dann empfiehlt es sich (bei gegebenen $M_1$ und $M_2$) diejenige mit dem grössten POP-Verhältnis auszuwählen. Beispiele für solche, sogenannt optimale Sequenzen ("best invertible sequences") sind der Dissertation von J. Ruprecht zu entnehmen. Für die Praxis sind jedoch Längen unter L = 10 bedeutungslos. Vielmehr werden relativ grosse Längen angestrebt (z.B. L gegen 100).

Für grosse Längen (z.B. L > 100) ist es schwierig, wenn nicht unmöglich (da die Rechenzeit zum Durchrechnen von $2^L$ Möglichkeiten oft zu gross ist) die Pulssequenz mit dem bezüglich aller Sequenzen maximalen Prozessgewinn zu finden. Man wird deshalb in der Praxis eine Gruppe von L-Sequenzen mit tendenziell guten Eigenschaften auswählen und den Prozessgewinn bezüglich dieser beschränkten Klasse optimieren. Der gesuchte Prozessgewinn wird dann ein relatives Maximum darstellen.

Im Hinblick auf die Signalverstärkung im Sender ist es vorteilhaft, wenn die Pulssequenz eine konstante Hüllkurve hat. Dies heisst nichts anderes, als dass die Einzelpulse der Sequenz betragsmässig alle gleich gross sind. Vorzugsweise handelt es sich um eine binäre Sequenz (d.h. s[i] = +/-1). Die maximale Sendeleistung entspricht dann gerade der mittleren.

Ein grosser Vorteil der Erfindung liegt darin, dass die Kanalschätzung beinahe ohne zusätzlichen Aufwand als "Nebenprodukt" der Datendetektion mitgeliefert wird. Das bei der Uebertragung über den Kanal transformierte DSSS Signal produziert am Ausgang des Inversfilters nämlich nicht eine reine Kronecker-Delta-Sequenz, sondern die mit dem Symbolwert $B_m$ multiplizierte (äquivalente zeitdiskrete) Uebertragungsfunktion h[.] des Kanals. Das Problem liegt nun darin, dass der Empfänger die übertragenen Symbole nicht kennt. Im folgenden wird nun beschrieben, wie die Datendetektion und die Kanalschätzung durchgeführt werden.

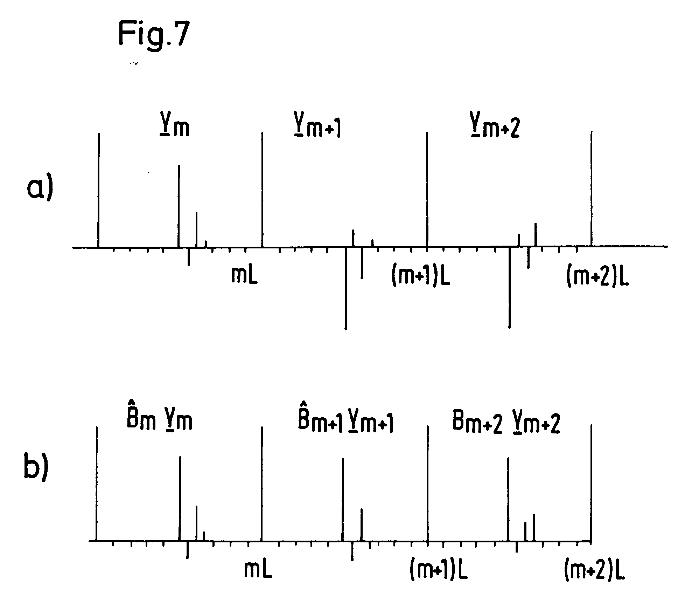

Fig. 6 zeigt im einzelnen, welche Funktionsblöcke der in Fig. 1 gezeigte ML-Detektor 13 aufweist. Im Prinzip werden zwei Aufgaben gelöst: Erstens die Symboldetektion nach dem ML-Prinzip und zweitens die Kanalschätzung im Sinn eines Decision Feedback.

Die Symboldetektion läuft nach einem an sich bekannten Verfahren ab. Zunächst wird das Ausgangssignal Y[i] von einem Matched Filter 14 mit der Stossantwort h*[-.] gefiltert ("*" bezeichnet den konjugiert-komplexen Wert; "-" bezeichnet die Zeitumkehr). Das Filter 14 ist also an den zum Kanal 2 äquivalenten, zeitdiskreten Kanal h[.] angepasst. Danach wird in einer Abtastschaltung 15 das Korrelationsmaximum abgetastet und damit die Taktrate um den Faktor L reduziert. Es wird also vom Chipintervall $T_c$ wieder auf die Symboldauer $T_s$ übergegangen.

Um die geschätzten Symbolwerte $B_m$ zu erhalten genügt es, das komplexwertige abgetastete Ausgangssignal des Matched Filters 14 auf den Realteil zu reduzieren (Realteilextraktor 16) und mit einem Schwellwertdetektor 17 zu diskriminieren.

Für die Kanalschätzung wird das Ausgangssignal Y[i] des Inversfilters in einem Seriell/parallel-Wandler 19 umgesetzt. Die mit der Chipdauer $T_c$ abgetasteten Signalwerte Y[i] werden dabei in Vektoren $\underline{Y}_m$ der Dimension L umgesetzt. Jeder Vektor $\underline{Y}_m$ beinhaltet die im gleichen Symbolintervall m liegenden Abtastwerte. Jeder Vektor $\underline{Y}_m$ entspricht einer mit einem unbekannten Symbolwert multiplizierten Musterfunktion der Kanalstossantwort.

Die im Datendetektionspfad geschätzten Symbole werden nun dazu verwendet, um die genannten Vektoren $\underline{Y}_m$ zu "reduzieren", d.h. um den multiplikativen "Symbolanteil" zu eliminieren (im Prinzip mittels einer Division). Im bevorzugten binären Fall ($B_m = +/-1$) besteht die Reduktion im wesentlichen in einer Multiplikation 18 (da $s_i^2 = 1$ gilt).

Die so reduzierten Vektoren $\underline{Y}_m'$ werden einem Kanalschätzer 20 zugeführt. Gemäss einer bevorzugten Ausführungsform macht dieser eine Mittelung über verschiedene Vektoren (Mittelung über mehrere Realisierungen der verrauschten und zeitlich langsam sich ändernden Kanalstossantwort):

$$(VI) \qquad \hat{\underline{h}}_m = \sum_{i=-\infty}^{m} w_i \underline{Y}_i'$$

Die Mittelung wird beispielsweise unter Zuhilfenahme eines Verzögerungsgliedes 21 und eines Rückkoppelungspfades verwirklicht. Die Art der Mittelung ist durch die Wahl der Gewichtungsfaktoren $w_i$ bestimmt. Die Gewichtungsfaktoren $w_i$ selbst können nach bekannten Grundsätzen festgelegt werden. Selbstverständlich können auch raffiniertere Methoden zur Kanalschätzung eingesetzt werden.

Die Filterkoeffizienten des Matched Filters 14 sind die zeitlich invertierten und konjugiert-komplexen Komponenten der gemittelten Vektoren.

Fig. 7a,b soll das Vorgehen bei der Kanalschätzung für den binären Fall veranschaulichen. Auf der Abszisse ist jeweils die Zeit und auf der Ordinate die Signalamplitude aufgetragen. Fig. 7a zeigt das Ausgangssignal Y[i] des Inversfilters. Jeweils L Abtastwerte werden zu einem Vektor $\underline{Y}_m$ zusammengefasst. Die Vektoren unterscheiden sich im vorliegenden Fall im wesentlichen nur durch die Polarität (gemäss Fig. gilt für das vorliegende Beispiel: $B_m = +1$, $B_{m+1} = -1$, $B_{m+2} = -1$). Die einzelnen Vektoren $\underline{Y}_m$ werden nun reduziert, indem mit dem geschätzten Symbolwert $\hat{B}_m$ multipliziert wird. Damit ist der Einfluss der unbekannten Daten eliminiert, alle Vektoren haben die gleiche Polarität (Fig. 7b). Für die Kanalschätzung erfolgt dann wie bereits erwähnt eine komponentenweise Mittelung.

Für eine gute Kanalschätzung sollte die Symboldauer stets so gross sein, dass sie grösser ist als die Dauer der Kanalstossantwort. Damit ist gewährleistet, dass sich die einzelnen Musterfunktionen gut trennen lassen, d.h. dass benachbarte Stossantworten nicht überlappen.

Die prinzipiellen Voraussetzungen für die Ermittlung einer einzelnen Musterfunktion der Kanalstossantwort mit Hilfe von einer aperiodischen Pulssequenz und einem Inversfilter werden in der zitierten Veröffentlichung von J. Ruprecht beschrieben. Sie können sinngemäss auf die erfindungsgemässe Kanalschätzung übertragen werden.

Die Maximierung des Prozessgewinns führt zu einer MMSE Schätzung des Kanals (Minimum Mean Square Error). Für eine gute Performance empfiehlt es sich lange Sequenzen mit einem hohen Prozessgewinn G zu wählen. Der maximal realisierbare Prozessgewinn ist jedoch aus prinzipiellen Gründen nie grösser als L (sog. "Matched Filter Bound").

Abschliessend kann festgehalten werden, dass mit der Erfindung ein Empfänger geschaffen worden ist, der die Vorteile der Bandspreiztechnik auf effiziente Weise für die Mobilfunkübertragung nutzbar macht.

## Bezeichnungsliste

1 - Sender; 2 - Kanal; 3 - Empfänger; 4 - Spreizschaltung; 5 - Pulssequenzgenerator; 6 - Impulsmodulator; 7 - Tiefpassfilter; 8 - Modulator; 9 - Demodulator; 10 - Tiefpassfilter; 11 - Abtaster; 12 - Inversfilter; 13 - ML-Detektor; 14 - Matched Filter; 15 - Abtastschaltung; 16 - Realteilextraktor; 17 - Schwellwertdetektor; 18 - Multiplikation; 19 - Seriell/Parallel-Wandler; 20 - Kanalschätzer; 21 - Verzögerungsglied; $B_m$ - Symbol; $B_m^{\text{"Dach"}}$ - geschätztes Symbol.

## Patentansprüche

1. Empfänger (3) für ein Direct Sequence Spread Spectrum (DSSS) Signal, wobei im DSSS Signal digitale Daten in Form von Symbolen mit einer vorgegebenen Pulssequenz (s[.]) der Länge L gespreizt sind, dadurch gekennzeichnet, dass zum Detektieren der Symbole ($B_m$) ein approximiertes Inversfilter (12) vorgesehen ist, welches bei Anregung durch die vorgegebene Pulssequenz (s[·]) als solche annähernd mit einer Kronecker-Delta-Sequenz als Ausgangssequenz antwortet.

2. Empfänger (3) nach Anspruch 1, dadurch gekennzeichnet, dass das approximierte Inversfilter (12) dem abgeschnittenen idealen Inversfilter entspricht, derart, dass die Koeffizienten v[k] des zur Pulssequenz $s[.] = (s_0, ..., s_L)$ gehörenden approximierten Inversfilters folgender Beziehung gehorchen:

$$v[k] = \frac{1}{2\pi} \int_{-\pi}^{\pi} \frac{d\Omega}{\sum_{i=0}^{L-1} s[i] e^{j(i-k)\Omega}} \quad ,$$

$k = -M_1 \ldots L+M_2$, v[k] = 0, für $k < -M_1$ und $k > L+M_2$.

3. Empfänger (3) nach Anspruch 1, dadurch gekennzeichnet, dass das approximierte Inversfilter (12) mit einer vorgegebenen Zahl von Koeffizienten v[k], $k = -M_1 \ldots L+M_2$, bei Anregung durch die vorgegebene Pulssequenz (s[·]) als solche mit einer Ausgangssequenz antwortet, die die Kronecker-Delta-Sequenz im Sinn der kleinsten Fehlerquadrate annähert.

4. Empfänger nach Anspruch 1, dadurch gekennzeichnet, dass das approximierte Inversfilter (12) mit einer vorgegebenen Zahl von Koeffizienten v[k], $k = -M_1 \ldots L+M_2$, bei Anregung durch die vorgegebene Pulssequenz (s[·]) als solche mit einer Ausgangssequenz antwortet, die die Kronecher-Delta-Sequenz im Sinn eines maximalen Peak/Off Peak Verhältnisses annähert.

5. Empfänger nach Anspruch 1, dadurch gekennzeichnet, dass die Pulssequenz s[.] so festgelegt ist, dass der Prozessgewinn G, definiert durch die Inverse der Energie des zugehörigen Inversfilters (12):

$$G = \cfrac{1}{\displaystyle\sum_{i=-\infty}^{+\infty} v[i]^2} \qquad,$$

dem Matched Filter Bound möglichst nahe kommt.

6. Empfänger nach Anspruch 1, dadurch gekennzeichnet, dass dem Inversfilter (12) ein kanalangepasstes Matched Filter (14) nachgeschaltet ist.

7. Empfänger nach Anspruch 6, dadurch gekennzeichnet, dass zum Schätzen des kanalangepassten Matched Filters (14)
   a) erste Mittel zum Schätzen der übertragenen Symbole nach dem Maximum-Likelihood Prinzip,
   b) zweite Mittel zum Reduzieren des Ausgangssignals des Inversfilters unter Verwendung der geschätzten Symbole auf eine Kanalstossantwort pro Symbol und
   c) dritte Mittel zum Bestimmen der Koeffizienten des kanalangepassten Matched Filters (14) vorgesehen sind.

8. Empfänger nach Anspruch 1, dadurch gekennzeichnet, dass die Symbole eine Symboldauer haben, die grösser als die Dauer der Kanalstossantwort plus eine Chipdauer ist.

9. Empfänger nach Anspruch 7, dadurch gekennzeichnet, dass die dritten Mittel eine Mittelung der einzelnen Kanalstossantworten durchführen.

10. Empfänger nach Anspruch 1, dadurch gekennzeichnet, dass die Pulssequenz eine konstante Hüllkurve hat.

11. Empfänger nach Anspruch 7, dadurch gekennzeichnet, dass die Symbole binär sind und dass die zweiten Mittel zum Eliminieren des multiplikativen Einflusses der Symbole auf das Ausgangssignal des Inversfilters (12) das genannte Ausgangssignal mit den geschätzten Symbolen multiplizieren.

12. Mobilfunksystem mit mindestens einer Basisstation und mehreren mobilen Teilnehmerstationen, dadurch gekennzeichnet, dass Basis- und Teilnehmerstationen einen Empfänger nach Anspruch 1 umfassen.

## Claims

1. A receiver (3) for a Direct Sequence Spread Spectrum (DSSS), whereby digital data in the form of symbols with a predetermined pulse sequence (s[.]) of length L are generated, characterised in that an approximated inverse filter (12) is provided in order to detect the symbols ($B_m$), which when triggered by the predetermined pulse sequence (s[.]) as such responds more or less with a Kronecker Delta Sequence as an output sequence.

2. A receiver (3) in accordance with claim 1, characterised in that the approximated inverse filter (12) corresponds to the cutoff ideal inverse filter, in such a way that the coefficients v[k] of the approximated inverse filter belonging to the pulse sequence s[.] conform to the following relationship:

$$v[k] = \frac{1}{2\pi} \int_{-\pi}^{\pi} \frac{d\Omega}{\displaystyle\sum_{i=0}^{L-1} s[i]\, e^{j(i-k)\Omega}} \qquad,$$

$k = -M_1 \ldots L + M_2$, $v[k] = 0$, where $k < -M_1$ and $k > L + M_2$

3. A receiver (3) in accordance with claim 1, characterised in that when triggered by the predetermined pulse sequence (s[.]) as such the approximated inverse filter (12) with a predetermined number of coefficients $v[k]$, $k = -M_1 \ldots L+M_2$ responds with an output sequence which approximates to the Kronecker Delta Sequence in terms of the least square error.

4. A receiver in accordance with claim 1, characterised in that when triggered by the predetermined pulse sequence (s[.]) as such the approximated inverse filter (12) with a predetermined number of coefficients $v[k]$, $k = -M_1 \ldots L+M_2$, responds with an output sequence which approximates to the Kronecker Delta Sequence in terms of a maximum Peak/Off Peak ratio.

5. A receiver in accordance with claim 1, characterised in that the pulse sequence s[.] is set in such a way that the process gain G, defined by the inverse of the energy of the relevant inverse filter (12):

$$G = \frac{1}{\displaystyle\sum_{i=-\infty}^{+\infty} v[i]^2}$$

comes as close as possible to the Matched Filter Bound.

6. A receiver in accordance with claim 1, characterised in that a Matched Filter (14) tuned to the channel is switched to the inverse filter (12).

7. A receiver in accordance with claim 1, characterised in that in order to ascertain which Matched Filter (14) is tuned to the channel, it is provided with

   a) first means for estimating the symbols transferred in accordance with the Maximum Likelihood Principle,
   b) second means for reducing the output signal of the inverse filter by applying the estimated symbols to a channel pulse response per symbol, and
   c) third means for determining the coefficients of the Matched Filter (14) tuned to the channel.

8. A receiver in accordance with claim 1, characterised in that the symbols have a symbol duration which is greater than the duration of the channel pulse response plus one chip duration.

9. A receiver in accordance with claim 7, characterised in that the third means communicate the individual channel pulse responses.

10. A receiver in accordance with claim 1, characterised in that the pulse sequence has a constant envelope.

11. A receiver in accordance with claim 7, characterised in that the symbols are binary and in that the second means multiply the output signal by the estimated symbol to eliminate the multiplier effect of the symbols on the output signal of the inverse filter (12).

12. A mobile radio system with at least one base station and several participating mobile stations, characterised in that the base and participating stations comprise a receiver in accordance with claim 1.

## Revendications

1. Récepteur (3) pour un signal DSSS (à spectre étalé à séquence directe), dans le signal DSSS, les données numériques étant étalées sous forme de symboles avec une séquence d'impulsion prédonnée (s[.]) de la longueur L, caractérisé en ce qu'un filtre d'inversion (12) et approximatisé est prévu pour la détection des symboles ($B_m$), filtre qui lors de l'excitation par la séquence d'impulsion prédonnée (s[.]) répond de façon approchée à celle-ci par une séquence Delta-Kronecker en tant que séquence de départ.

2. Récepteur (3), selon la revendication 1, caractérisé en ce que le filtre d'inversion approximatisé (12) correspond au filtre d'inversion idéal découpé de telle sorte que les coefficients $v[k]$ du filtre d'inversion approximatisé appartenant à la séquence d'impulsion s[.] appartiennent à la relation suivante :

$$v[k] = \frac{1}{2\pi} \int_{-\pi}^{\pi} \frac{d\Omega}{\displaystyle\sum_{i=0}^{L-1} s[i]e^{j(i-k)\Omega}} \quad ,$$

$k = -M_1 \ldots L+M_2$, $v[k] = 0$ , pour $k < -M_1$ et $k > L+M_2$.

3. Récepteur (3) selon la revendication 1, caractérisé en ce que le filtre d'inversion approximatisé (12) répond par un nombre prédonné de coefficient $v[k]$, $k = -M_1 \ldots L+M_2$, lors de l'excitation par la séquence d'impulsions prédonnées (s[.]) avec une séquence de sortie qui se rapproche de la séquence Delta-kronecker au sens des plus petits carrés d'erreurs.

4. Récepteur selon la revendication 1, caractérisé en ce que le filtre d'inversion approximatisé (12) avec un nombre prédonné de coefficients $v[k]$, $k = -M_1 \ldots L+M_2$, répond lors de l'excitation par la séquence d'impulsions prédonnées à (s[.]) en tant que telle par une séquence de sortie qui se rapproche de la séquence Delta-Kronecker au sens d'un rapport maximum Pic/hors Pic.

5. Récepteur selon la revendication 1, caractérisé en ce que la séquence d'impulsion s[.] est déterminée de telle sorte que le gain de processus G, défini par l'inversion d'énergie du filtre d'inversion affecté (12) :

$$G \approx \frac{1}{\displaystyle\sum_{i=-\infty}^{+\infty} v[i]^2}$$

se rapproche au plus près du filtre apparié Matched Filter Bound.

6. Récepteur selon la revendication 1, caractérisé en ce qu'un filtre apparié adapté au canal (14) est monté en aval du filtre d'inversion (12).

7. Récepteur selon la revendication 6, caractérisé en ce que pour la détermination des filtres appariés adaptés au canal (14) sont prévus :
   (a) des premiers moyens pour évaluer les symboles transmis selon le principe de la similitude maximum,
   (b) des seconds moyens pour réduire le signal de sortie du filtre d'inversion en utilisant les symboles évalués sur une réponse de canal par symbole, et
   (c) des troisièmes moyens pour déterminer les coefficients du filtre apparié (14) adapté au canal.

8. Récepteur selon la revendication 1, caractérisé en ce que les symboles ont une durée de symbole qui est supérieure à la durée de la réponse de canal plus une durée de puce.

9. Récepteur selon la revendication 7, caractérisé en ce que les troisièmes moyens effectuent une mise en moyenne des différentes réponses de canal.

10. Récepteur selon la revendication 1, caractérisé en ce que la séquence d'impulsions présente une courbe enveloppante constante.

11. Récepteur selon la revendication 7, caractérisé en ce que les symboles sont binaires et en ce que les deuxièmes moyens destinés à éliminer l'influence multiplicative des symboles sur le signal de sortie du filtre d'inversion (12) multiplient le signal de sortie cité avec les symboles évalués.

12. Appareil radiotéléphonique mobile avec au moins une station de base et plusieurs stations du réseau mobile, caractérisé en ce que les stations de base et les stations du réseau incorporent un récepteur selon la revendication 1.

## Fig.1

## Fig.6

Fig.2

Fig.3

Fig.4

Fig.5

# Fig.7